# EUROPEAN PATENT SPECIFICATION

(11) **EP 4 211 276 B1**
(45) Date of publication and mention of the grant of the patent: **07.10.2026**
(21) Application number: 21766504.1
(22) Date of filing: 09.09.2021
(51) Int. Cl.: C21B 5/06, C21B 13/00

(54) **METHOD FOR OPERATING A BLAST FURNACE INSTALLATION**
VERFAHREN ZUM BETREIBEN EINER HOCHOFENANLAGE
PROCÉDÉ POUR LA CONDUITE D'UNE INSTALLATION DE HAUT FOURNEAU

(30) Priority: 09.09.2020 LU 102057
(43) Date of publication of application: 19.07.2023
(73) Proprietor: Paul Wurth S.A., 1122 Luxembourg (LU)
(72) Inventor: CASTAGNOLA, Cristiano, 16131 Genova (IT); MICHELETTI, Lorenzo, 57022 Castagneto Carducci (Livorno) (IT); KINZEL, Klaus Peter, 5222 Sandweiler (LU); VALERIUS, Miriam, 54439 Saarburg (DE)
(74) Representative: Office Freylinger
(86) International application number: PCT/EP2021/074749
(87) International publication number: WO 2022/053537

(56) References cited:
- WO-A1-2005/098052
- WO-A1-2009/100819

## Description

### Technical field

The present invention generally relates to a method for operating a blast furnace installation as well as to such a blast furnace installation.

### Background Art

Despite alternative methods, like scrap melting or direct reduction within an electric arc furnace, the blast furnace (BF) today still represents the most widely used process for steel production. One of the concerns of a blast furnace installation is the blast furnace gas (BFG) exiting the blast furnace. Since this gas exits the blast furnace at its top it is commonly also referred to as "top gas". While, in the early days, this blast furnace gas may have been allowed to simply escape into the atmosphere, this has later been avoided by using it in BFG fed power plants in order not to waste the energy content of the gas and cause undue burden on the environment. One component in the blast furnace gas is CO₂, which is environmentally harmful and is mainly useless for industrial applications. Indeed, the waste gas exiting the power plant fed with the blast furnace gas typically comprises a concentration of CO₂ as high as 20 vol% to 40 vol%. The blast furnace gas being combusted usually comprises besides the before mentioned CO₂ considerable amounts of N₂, CO, H₂O and H₂. The N₂ content, however, largely depends on whether hot air or (pure) oxygen is used for the blast furnace.

Mainly in order to reduce the amount of coke or other carbon sources used, a suggestion was made to recover the blast furnace gas from the blast furnace, treat it to improve its reduction potential and to inject it back into the blast furnace to aid the reduction process. One method for doing this is reducing the CO₂ content in the blast furnace gas by Pressure Swing Adsorption (PSA) or Vacuum Pressure Swing Adsorption (VPSA), such as disclosed in patent application EP 2 886666 A1. PSA/VPSA installations produce a first stream of gas which is rich in CO and H₂ and a second stream of gas rich in CO₂ and H₂O. The first stream of gas can be used as reduction gas and fed back into the blast furnace. One example for this approach is the ULCOS (Ultra Low CO₂ Steelmaking) process, where apart from the recycled first stream of gas, pulverized coal and cold oxygen are fed into the blast furnace. This type of furnace is also referred to as "top gas recycling OBF" (oxygen blast furnace).

The second stream of gas can be removed from the installation and, after extraction of the remaining calorific value, disposed of. This disposal controversially consists in pumping the CO₂ rich gas into pockets underground for storage. Furthermore, although PSA/VPSA installations allow a considerable reduction of CO₂ content in the blast furnace gas from about 35% to about 5%, they are very expensive to acquire, to maintain and to operate and further they need a lot of space.

It has also been proposed to use the blast furnace gas as a reforming agent for hydrocarbons in order to obtain a synthesis gas (also referred to as syngas) that can be used for several industrial purposes (e.g. JP2009192125 A, JP2009120897 A, EP3080307 A1, ...). According to a common reforming process, the blast furnace gas is mixed with a fuel gas that contains at least one hydrocarbon (e.g. lower alkanes). In a so-called dry reforming reaction, the hydrocarbons of the fuel gas react with the CO₂ in the blast furnace gas to produce H₂ and CO. At the same time the hydrocarbons react with the H₂O in the blast furnace gas also producing H₂ and CO by so-called steam reforming reaction. Either way, a synthesis gas is obtained that has a significantly increased concentration of H₂ and CO.

WO 2009/100819 A1 discloses a method for melting of pig iron in a blast furnace operated with oxygen or in a melt-reduction plant, each having a reduction region, the method comprising: discharging purified crude gas from the reduction region, recirculating the crude gas into the reduction region, while adding hydrocarbons to the crude gas to produce a mixture; generating a reduction which has a temperature of above 1000°C by partial oxidation of hydrocarbons by means of oxygen gas having an oxygen content of above 90% by volume; blending the mixture of purified crude gas and hydrocarbons with the generated reduction gas in order to form a recirculation gas with a temperature of above 800°C; and then recirculating the recirculation gas into the reduction region according to an auto-reforming process.

WO 2005/098052 A1 relates to a different way of reducing iron ore, namely by direct reduction in the solid state, within in a shaft furnace, to produce (solid) sponge iron, i.e. direct reduced iron (DRI), instead of reducing iron ore by smelting to obtain (molten) pig iron. This document proposes the recirculation of a stream of exhaust reducing gas which has been reformed in the presence of natural gas and oxygen.

The problems with the above-mentioned solutions are that they require expensive and technically complex equipment.

### Technical problem

It is thus an object of the present invention to provide a new method for operating a blast furnace installation, i.e. a blast furnace and its ancillary equipment, as well as a corresponding blast furnace installation, allowing for at least partially overcoming said problems.

### General Description of the Invention

In order to achieve said object, the present invention proposes, in a first aspect, a method for operating a blast furnace for producing pig iron by smelting, comprising the steps of
(a) heating a first stream of steam in a first heater, before or after having been mixed with an oxygen source selected from oxygen (O₂) and oxygen-enriched air, to provide a first heated stream of oxygen-enriched steam,
(b) heating a first stream of blast furnace gas from the blast furnace and a first stream of natural gas in a second heater, before or after being mixed together, to provide a heated carbon feed stream,
(c) feeding the first heated stream of oxygen-enriched steam and the heated carbon feed stream either as a combined stream or separately to a catalytic partial oxidation reactor to produce a stream of hot syngas, and
(d) feeding said stream of syngas to the shaft of the blast furnace.

In a second aspect, the invention proposes a blast furnace installation for producing pig iron comprising a blast furnace provided with gas inlets in the shaft arranged for feeding a stream of syngas to the blast furnace. The blast furnace installation further comprises a first heater in fluidic downstream connection with a stream of steam and in fluidic downstream or upstream connection with an oxygen source providing oxygen or oxygen-enriched air, said first heater being arranged for heating said stream of steam to provide a first heated stream of oxygen-enriched steam; a second heater in fluidic connection with the top of the blast furnace arranged for conveying a first stream of blast furnace gas and with a source of a first stream of natural gas, said second heater being arranged for heating said first stream of blast furnace gas and said first stream of natural gas either separately or mixed to provide a heated carbon feed stream, wherein said first and second heater are in fluidic downstream connection with one or more reactor inlets of a catalytic partial oxidation reactor arranged for producing a stream of syngas, either directly for feeding the first heated stream of oxygen-enriched steam and the heated carbon feed stream separately to said one or more reactor inlets or through a mixing unit arranged for first joining the first heated stream of oxygen-enriched steam with the heated carbon feed stream to provide a combined stream and for feeding said combined stream to said one or more reactor inlets. Furthermore, said catalytic partial oxidation reactor is further in fluidic downstream connection with the gas inlets in the shaft of the blast furnace. Advantageously, said blast furnace installation can be operated by implementing a method according to the first aspect and as described more in detail below.

Catalytic partial oxidation reactors are known in the art of synthetic gas (syngas) production. Advantageously the catalytic partial oxidation reactor is a Short Contact Time Catalytic Partial Oxidation reactor. The process of Catalytic Partial Oxidation (CPO) is based on the following reaction, where oxygen can also come from air or oxygen-enriched air or a combination of oxygen and nitrogen:

CH₄ + ½ O₂ ↔ CO + H₂

conducted by colliding for few milliseconds, gaseous premixed reactant flows through extremely hot catalytic surfaces. The fast and selective chemistry that is originated is confined inside a thin solid-gas inter-phase zone surrounding the catalyst particles. Here, the molecules typically spend very short time at temperatures variable between 600 and 1200 °C. A key issue for the technological exploitation is in the possibility of avoiding the propagation of reactions into the gas phase, which has to remain at a "relatively low" temperature. This condition favours the formation of primary reaction products (namely CO and H₂) inhibiting chain reactions.

Experimental studies indicate that partial oxidation products are directly produced through parallel and competing surface reactions and that the formation of partial oxidation products is favoured under the CPO conditions due to the very high surface temperatures. The occurrence of the reactions in these local environments determines in some cases conversion and selectivity values higher than those predicted by the thermodynamic equilibrium at the reactor exit temperatures.

Catalytic Partial Oxidation, and in particular Short Contact Time Catalytic Partial Oxidation (SCT-CPO), combine heterogeneous catalysis characteristics and flameless combustion in porous media and is known, the main advantages of catalytic partial oxidation applied for the production of syngas to be injected in a blast furnace can be summarized as follows:
- small dimensions (reactor dimensions are reduced of more than 2 orders of magnitude respect than a classic Steam Reforming reactor);
- technical and operational simplicity (much reduced complexity in comparison to e.g. classic Steam Reforming);
- lowest CAPEX per kg syngas/hr produced amongst all NG reforming technologies;
- possibility of modular construction of pre-fabricated and skid mounted units;
- flexibility towards feedstock composition & production capacity; and
- reduction of investment costs and energy consumption.

Indeed, the present inventors have found that this syngas production technology may advantageously be applied to a mix of natural gas and blast furnace gas, thereby providing a syngas with compositions which are particularly suitable to the feeding within the shaft of the blast furnace. In fact, natural gas fed to CPO reactor is subjected to partial oxidation reaction producing CO and H₂ and delivering heat. The latter is used within the system to sustain the endothermic reforming reaction (conversion of hydrocarbon by steam or CO₂) that leads to the production of CO and H₂. However, the blast furnace gas has a reduced content of carbon compared to natural gas. Thus, the behavior within the reactor is quite different. Increasing the percentage of blast furnace gas in the feeding gas stream is possible but values like critical ratios e.g. steam to carbon ratio or oxygen to carbon ratio and maximum acceptable component concentration in the syngas should be kept. For this reason, it may be advantageous to limit the proportion of blast furnace gas being mixed with the natural gas stream. The maximum proportion of the blast furnace gas in the feed gas mix with NG ranges generally is from 15 to 30 % depending on the actual composition and temperature of the fed blast furnace gas to the reactor.

Indeed the inventors determined that a particularly advantageous syngas quality can be obtained by controlling the Oxygen/Carbon ratio at values from 0.58 to 0.68 mol/mol, preferably from 0.60 to 0.66 mol/mol, more preferably from 0.62 to 0.64 mol/mol, most preferably about 0.63 mol/mol, while Steam/Carbon ratio is preferably controlled at values from 0.10 to 0.40 mol/mol, preferably from 0.15 to 0.35 mol/mol, more preferably from 0.20 to 0.30 mol/mol, most preferably at about 0.25 mol/mol.

The behavior of the blast furnace gas within the catalytic partial oxidation reactor is strictly linked to reactions involved within the catalytic partial oxidation reactor. Beyond the components involved in the partial oxidation, the Water Gas Shift Reaction further determines the final composition of the syngas. It has been found that the presence of CO₂, through the blast furnace gas stream, involves a readjustment of the equilibrium composition, which leads the excess of CO₂ to react with the hydrogen, thus increasing the CO and H₂O content.

In addition to the benefits mentioned above, one of the major advantages of the present method and installation is the substantially reduced CO₂ production of the blast furnace operation by reconditioning part of the blast furnace gas for reuse in order to decrease the carbon input to the blast furnace.

Furthermore, the shaft injection of the resulting syngas allows a significantly reduction of the amount of coke per ton of pig iron produced, also called coke rate. Additionally, the injection of syngas partially from natural gas is not only compatible with tuyere injection of pulverized coal or natural gas, but can advantageously allow to replace further amounts of coke with natural gas, i.e. natural gas converted in the presence of blast furnace gas to a syngas. These and further advantages of the present method for operating a blast furnace, as well as the presently disclosed blast furnace installation will be further detailed below.

Blast furnace gas, which may also be referred to as top gas or BFG, is collected from the top of the blast furnace and is a gas containing mainly CO₂ and other components like CO, H₂O, H₂ or other. It may also contain some N₂ depending on the hot blast feeding. For conventionally operated blast furnaces, the N₂ concentration in the blast furnace gas is generally between 35 and 50 vol% (% by volume), whereas for blast furnace gas operated according to the present invention, i.e. using syngas produced as described herein, the N₂ concentration is generally lower, for example below 20 vol%, below 10 vol% or even below 5 vol%. Normally, the blast furnace gas needs to be cleaned in order to reduce e.g. its dust content. Hence, the first stream of blast furnace gas is further subjected to a gas cleaning step, preferably a dust removal step, metals removal step and/or HCl removal step, usually before being mixed with the first stream of natural gas. Accordingly, in a preferred blast furnace installation, the fluidic connection conveying the first stream of blast furnace gas from the blast furnace comprises a gas cleaning plant. This gas cleaning part preferably comprises a dust removal unit, such as one or more cyclones, scrubbers and/or bag filters, a metals removal unit, such as active carbon fixed bed reactor and/or a HCl removal unit, such as scrubbers with reactant injection. If required to bring the blast furnace gas at the required pressure in order to generate syngas suitable for injection in the shaft of the blast furnace, it may be compressed, e.g. at 0.3-0.5 MPa through a dedicated system provided downstream the blast furnace gas network.

The feed streams to the catalytic partial oxidation reactor, e.g. the carbon feed stream and the stream of oxygen-enriched steam, generally need to reach a temperature from 300 to 450°C after having been combined for an appropriate operation of said reactor. Therefore, in preferred embodiments of the method, the heated carbon feed stream of step (b) is further heated within a third heater before step (c). In preferred embodiments of the blast furnace installation, the second heater is thus in fluidic downstream connection with a third heater arranged for further heating the carbon feed stream upstream of mixing unit.

The heat for the heaters may be produced by any appropriate means and energy source. Advantageously in the present method, a second stream of blast furnace gas is burned in a burner in the presence of combustion air or oxygen-enriched air within the first and/or second heater and/or third heater to provide the heat within said heaters. In particularly preferred embodiments, the first, second and/or third heaters are configured as corresponding heat exchangers and one burner is used for heating the first, second and third heat exchangers.

In advantageous embodiments, the off-gas from the burner(s) can be fed to the first stream of blast furnace gas from the blast furnace, to the first stream of natural gas or to the already (partially) heated carbon feed stream. Thereby not only the residual heat of the burner off-gas can be utilized, but also the CO₂ produced in the burner added to that already contained in the blast furnace gas.

In other preferred embodiments, the first, second and/or third heaters are configured as heat exchangers using process heat from other processes within the blast furnace installation or plant.

Depending on their origin (or composition), it may be advantageous or necessary to subject the first stream of blast furnace gas and/or the first stream of natural gas and/or the heated carbon feed stream to a further treatment, such as a desulphurization step. In preferred embodiments, the heated carbon feed stream is subjected to a desulphurization step. Hence, the blast furnace installation may further comprise a desulphurization unit arranged within the fluidic connection of the first stream of blast furnace gas and/or the first stream of natural gas and/or the heated carbon feed stream, preferably within the fluidic connection of the heated carbon feed stream.

According to the invention, the first stream of steam is heated in a first heater, before or after having been enriched with oxygen, to provide a first heated stream of oxygen-enriched steam. Preferably the oxygen/oxygen-enriched air for enriching the first heated stream of steam is heated to a temperature from 100 to 350 °C, preferably from 120 to 280 °C. Advantageously, the oxygen/oxygen-enriched air for enriching the first heated stream of steam is heated to a temperature within (i.e. differing by not more than) 100 °C, preferably within 50 °C, of that of said first heated stream of steam before enrichment.

In particularly advantageous embodiments of the invention, the first heated stream of oxygen-enriched steam, the stream of natural gas and the stream of blast furnace gas are fed in amounts such that the stream of syngas of step (d) has a chemical composition fulfilling the following constraints:
- CH₄ < 5 vol%,
- H₂O < 8 vol%, and
- a molar ratio (CO+H₂)/(H₂O+CO₂) > 7.

Preferably the stream of syngas of step (d) has temperatures between 800 and 1100 °C, more preferably between 900 °C and 1000 °C.

It has been found that it may be desirable or beneficial for the operation of the blast furnace to add hydrogen, in particular so-called renewable or "green" hydrogen at an appropriate location of the process stream. In this context, renewable or "green" hydrogen is hydrogen (H₂) produced by electrolysis of water using electricity coming from renewable sources such as wind, solar or hydropower. In particular, it may be advantageous to add hydrogen to the stream of syngas after the catalytic partial oxidation reactor before step (d) to adapt its temperature to the required temperature level of syngas for the shaft injection if the hydrogen is preheated to the same temperature level. The preheating of the hydrogen generally is realized e.g. in an appropriate further heater or heat exchanger, which is preferably heated within the same enclosure as the first, second and third heaters, more preferably heated by one common burner.

The expression "natural gas" in the context of the present invention does not only designate natural gas as such, i.e. a naturally occurring hydrocarbon gas mixture of fossil origin consisting primarily of methane and commonly including varying amounts of other higher alkanes, but also gases with similar hydrocarbon constituents, such as biogas or coke oven gas, where the impurities content (if necessary after purification) make them compatible with the contact of catalysis in the CPO reactor.

"About" in the present context, means that a given numeric value covers a range of values from -10 % to + 10% of said numeric value, preferably a range of values from -5 % to +5 % of said numeric value.

"Shaft feeding", "feeding ... to the shaft of a blast furnace" or "gas inlets in the shaft" implies the injection of a material above the hot blast (tuyere) level, i.e. above the bosh, preferably within the gas solid reduction zone of ferrous oxide above the cohesive zone.

The expression "oxygen-enriched air" means air to which oxygen gas (O₂) has been added, such that the proportion of oxygen within said gas is from 23 to 85 vol% or above, preferably from 60 to 75 vol%. The expression "oxygen-enriched steam" means steam (gaseous water) comprising oxygen, generally from 10 to 85 vol% or above, preferably from 25 to 75 vol% of oxygen gas (O₂).

The expression "in fluidic connection" means that two devices are connected by conducts or pipes such that a fluid, e.g. a gas, can flow from one device to another. This expression includes means for changing this flow, e.g. valves or fans for regulating the mass flow, compressors for regulating the pressure, etc., as well as control elements, such as sensors, actuators, etc. necessary or desirable for an appropriate control of the blast furnace operation as a whole or the operation of each of the elements within the blast furnace installation.

### Brief Description of the Drawings

Preferred embodiments of the invention will now be described, by way of example, with reference to the accompanying drawings in which:

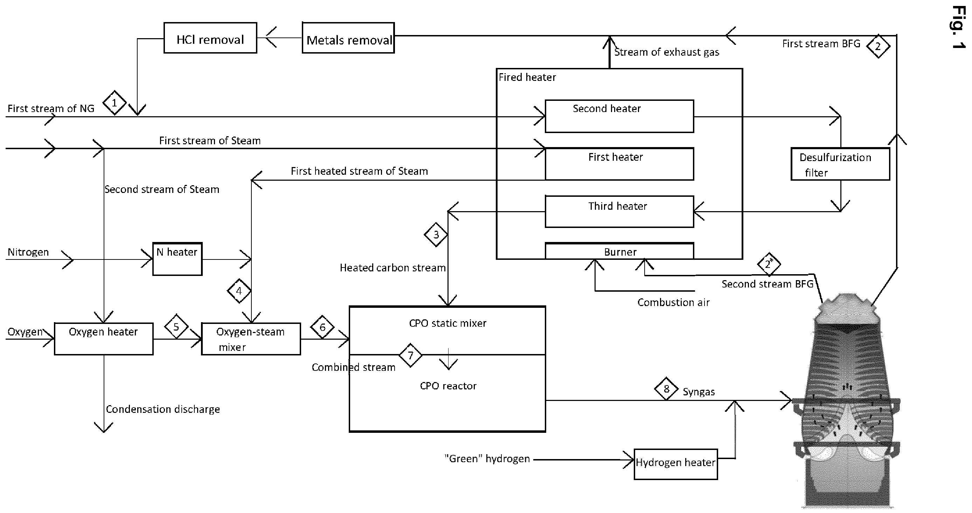

Fig. 1 is a schematic flowsheet diagram of an embodiment of a blast furnace installation according to the invention and allowing for implementing the method of the invention.

Further details and advantages of the present invention will be apparent from the following detailed description of several not limiting embodiments with reference to the attached drawing.

### Description of Preferred Embodiments

The requirements for the syngas and its utilization in the blast furnace are different to the applications already used today:
Reduction degree and temperature level of the syngas:
In other industries normally the syngas is produced and then cooled to separate the excess of steam from the syngas. Thereby only cooled gas is used in the downstream processes. In existing industrial applications beside the steel industry, a high reduction degree is not important. In steel industry however a high reduction degree, preferably above 7, is preferable, whereas the reduction degree is defined by the following molar ratio: (cCO+cH₂)/(cH₂O+cCO₂).

Furthermore, high temperatures of syngas are favored compatible to the temperature level required for shaft injection in order to allow maximum thermal efficiency. Thus the temperature should be in the order of 900 to 1100°C to allow its injection in the shaft of a blast furnace.

### Ratio H₂/CO

In the other industries, beside steel industry, the syngas is used for specific applications, such as pure hydrogen production, ammonia or the production of other chemical components. Thereby a specific ratio of hydrogen to CO is generally required.

In comparison, the objective by using syngas in the blast furnace is reduction of ore, which is achieved with both reducing components, CO and hydrogen. While there is a difference between the reduction of ore with CO or hydrogen, this difference is relatively marginal considering that syngas is only part of the reducing gas used within the blast furnace.

### CO₂ emissions

Coke is the main energy input in the blast furnace iron making. From the economic and CO₂ point of view, this is the less favorable energy source. Substitution of coke by other energy sources, mostly injected at tuyere level, is widely employed. Due to cost reasons mostly pulverized coal is injected, however in countries with low natural gas price, this energy is used. Often residues like waste plastics are also injected in the blast furnace.

These auxiliary fuels may have a positive impact on the CO₂ emissions from the blast furnace steel making, meanwhile their utilization is limited to process reasons and very often these limits are already attained today. The blast furnace produces blast furnace gas (BFG), which contains up to approximately 40 % of the energy input to the blast furnace. This gas is generally used for internal heat requirements in the steel plant, but also for electric energy production. For the objective of reducing the CO₂ footprint of a blast furnace based steel production, one important strategy is thus to use this BFG for metallurgical reasons and apply other CO₂ lean energies such as green electric energy for the remaining energy requirement of the steel plant.

Hence, the synthesis gas production should, beside the utilization of a CO₂ lean hydrocarbon, also integrate blast furnace gas as much as possible in order to improve the CO₂ emission reduction potential from the blast furnace iron making.

### Impurities

Due to the utilization of coal and coke as well as often cheap secondary fuels as waste plastics or tar being used in the blast furnace, the typical and detrimental chemical components, such as chlorine and sulfur containing molecules, are part of the blast furnace gas. When using this gas for the production of syngas, these components may lead to quick poisoning of the reforming catalyst if not properly and pre-treated.

### Pressure

Reforming reactions are favored by low pressure due to the Le Chatelier principle. However because compression of syngas downstream the reformer is costly (due to the increased flow rate) and smaller dimensions of equipment and catalyst bed, common syngas processes are operated at high pressure. In case of blast furnace application, low pressure levels are required only. Therefore, the syngas is injected in the shaft of the blast furnace, with a pressure typically between 1 and 4 barg.

Reforming and auxiliary technologies for syngas production:

### Reforming reactions

Natural gas reforming can principally be performed by following reactions:

| | |
|---|---|
| Partial oxidation in the presence of oxygen: | CH₄ + ½ *O₂* = *CO + H₂* |

This reaction is the dominant reaction in CPO and is strongly exothermic thereby releasing high amounts of energy.

| | |
|---|---|
| Steam reforming in the presence of steam: | *CH₄ + H*₂*O* = *CO* + 3*H*₂ |
| Dry reforming in the presence of CO₂: | *CH₄* + *CO*₂ *= 2CO* + *2H₂* |

These two last reactions are strongly endothermic and require a lot of heat.

Reforming technologies and its adaptation to blast furnace shaft injection
The thermodynamic equilibrium at the desired best reduction potential of the gas, leads to a temperature of the syngas, which is still too low for its injection in the shaft. In fact, increasing the temperature further result in higher requirement of higher oxygen and decreased reduction potential of the syngas, which is not favorable for the intended use.

### Pre-heating of the feed gases

The inventors found that to improve the situation a pre-heating of the feed gases could be applied to a CPO. In fact, with such a pre-heating, not only the reduction potential of the syngas can be increased, but the desired syngas temperature of about 1000 °C can also be obtained.

Fig. 1 illustrates an embodiment of a preferred method for operating a blast furnace installation comprising the shaft injection of a stream of syngas at temperatures of about 1000 °C and at a pressure of 1 to 4 barg.

Fig. 1 identifies the following main streams which will be further explained below:
[1] - First stream of NG fed to the second heater after mixing with a first stream of BFG.
[2] - First stream of BFG that will be mixed with the first stream of NG and then fed to the second heater and CPO reactor. This first stream of BFG stream should be properly treated before (metals and HCl removal).
[2*] - Second stream of BFG fed to the burner to heat the first, second and third heaters.
[3] - Heated carbon feed stream composed of heated BFG-NG to be fed to the CPO reactor.
[4] - Heated stream of steam (to be enriched with oxygen) and fed to the CPO reactor.
[5] - Heated oxygen stream (to be mixed with steam) and fed to the CPO reactor (6.).
[6] - First heated stream of oxygen-enriched steam to be fed to the CPO reactor.
[7] - First heated stream of oxygen-enriched steam and heated carbon feed stream as a combined stream in the CPO reactor (flowing from static mixer towards reactor).
[8] - Stream of syngas (to be injected in the shaft of the blast furnace) optionally with added hydrogen, preferably renewable hydrogen.

In Fig. 1, a first stream of blast furnace gas [2] is collected from the top of the blast furnace and if necessary cleaned, e.g. by removing dust, metals, HCl, etc. This stream of cleaned blast furnace gas and a first stream of natural gas [1] are heated in a second and a third heater, before or after being mixed together, to obtain a heated carbon feed stream [3] for the downstream catalytic partial oxidation reactor. If deemed necessary or useful, the first stream of natural gas [1], the first stream of blast furnace gas [2] or the carbon feed stream [3] may be further cleaned, such as by submitting them to a desulfurization step (desulfurization filter).

Concurrently, a first stream of steam [4] is heated in a first heater, before or after having been mixed with an oxygen source, selected from oxygen (oxygen gas O2) and oxygen-enriched air, to obtain a first heated stream of oxygen-enriched steam [6]. Preferably the oxygen source is first heated in an oxygen heater, e.g. a heat exchanger heated by a second stream of steam to obtain a heated oxygen stream [5], condensed water resulting from the heat exchange of this second stream of steam being thereafter discharged from the heat exchanger (condensation discharge). The heated oxygen stream [5] is preferably heated in a fourth heater (oxygen heater) to temperatures approaching/closely matching those of the heated carbon feed stream [4] (i.e. temperatures differing e.g. by no more than 100 °C, preferably by no more than 50 °C, from the temperatures of the heated carbon feed stream).

The first, second and third heaters are advantageously heat exchangers, preferably within the same enclosure (Fired heater), more preferably heated by one common burner. Said burner is preferably operated by burning a second stream of blast furnace gas in the presence of air, oxygen-enriched air or even oxygen. In some embodiments, the exhaust gas resulting from the combustion of the second stream of blast furnace gas in the presence of air, oxygen-enriched air or oxygen can be added to the first stream of blast furnace gas [2] or to the first stream of natural gas [1] or to the carbon feed stream [3], preferably to the first stream of blast furnace gas [2] upstream of the above-mentioned cleaning step(s).

If useful or necessary, a stream of nitrogen from a nitrogen source can be added to the heated carbon feed stream [4], to the heated oxygen stream [5] or to the combined stream [6], preferably after having been heated in a further (nitrogen) heater to temperatures approaching/closely matching those of the stream to which it is added (i.e. temperatures differing e.g. by no more than 100 °C, preferably by no more than 50 °C, from the temperatures of the stream to which it is added).

The first heated stream of steam [4] is then mixed to the heated oxygen source stream [5] to obtain a first heated stream of oxygen-enriched steam [6] which will be fed to the CPO reactor through one or more CPO reactor inlets.

The heated carbon feed stream is also fed to the CPO reactor through one or more reactor inlets. The combined stream of first heated stream of oxygen-enriched steam and carbon feed [7], optionally after having been mixed in a mixer, e.g. a CPO static mixer, is then allowed to react on the catalyst surface within the CPO reactor to form a stream of syngas [8] having temperatures in the range of 900 to 1100 °C.

If desired or beneficial a stream of hydrogen, preferably renewable or so-called "green" hydrogen, can be added to the stream of syngas [8], if necessary after having preheated in an appropriate heater (hydrogen heater).

The (optionally further compressed) stream of syngas [8], optionally with added hydrogen, preferably renewable hydrogen, is thereafter fed to gas inlets within the shaft of the blast furnace, i.e. above the bosh, preferably within the gas solid reduction zone of ferrous oxide above the cohesive zone

## Claims

1. A method for operating a blast furnace for producing pig iron, comprising the steps of
(a) heating a first stream of steam in a first heater, before or after having been mixed with an oxygen source selected from oxygen and oxygen-enriched air, to provide a first heated stream of oxygen-enriched steam,
(b) heating a first stream of blast furnace gas from the blast furnace and a first stream of natural gas in a second heater, before or after being mixed together, to provide a heated carbon feed stream,
(c) feeding the first heated stream of oxygen-enriched steam and the heated carbon feed stream either as a combined stream or separately to a catalytic partial oxidation reactor to produce a stream of syngas, and
(d) feeding said stream of syngas to the shaft of the blast furnace.

2. The method as claimed in claim 1, wherein the oxygen source is oxygen and the catalytic partial oxidation reactor is a Short Contact Time Catalytic Partial Oxidation reactor; and/or wherein the oxygen source for enriching the first heated stream of steam is heated to a temperature differing by no more than 100 °C, preferably by no more than 50 °C from the temperature of said first heated stream of steam before oxygen enrichment.

3. The method as claimed in claim 1 or 2, wherein the first stream of blast furnace gas is further subjected to a gas cleaning step, preferably a dust removal step, metals removal step and/or HCl removal step, before being mixed with the first stream of natural gas.

4. The method as claimed in any one of claims 1 to 3, wherein the heated carbon feed stream of step (b) is further heated within a third heater before step (c).

5. The method as claimed in any one of claims 1 to 4, wherein a second stream of blast furnace gas is burned in a burner within the first and/or the second heater and/or, if applicable, the third heater to provide the heat within said heaters; wherein the first, second and third heaters are preferably heated by a same burner; and/or wherein off-gas produced by the burner(s) is preferably fed to the first stream of blast furnace gas coming from the blast furnace, which is fed to the first stream of natural gas or to the heated carbon feed stream.

6. The method as claimed in any one of claims 1 to 5, wherein the first stream of blast furnace gas and/or the first stream of natural gas and/or the heated carbon feed stream is/are subjected to a desulphurization step, preferably the heated carbon feed stream is subjected to a desulphurization step.

7. The method as claimed in any one of claims 1 to 6, wherein the temperature of the combined stream in step (c) is from 200 to 500°C, preferably from 300 to 400°C.

8. The method as claimed in any one of claims 1 to 7, wherein first heated stream of oxygen-enriched steam, the stream of natural gas and the stream of blast furnace gas are fed in amounts such that the stream of syngas of step (d) has a chemical composition fulfilling the following constraints of CH₄ < 5 % vol, H₂O < 8 % vol and (CO+H₂)/(H₂O+CO₂) > 7.

9. The method as claimed in any one of claims 1 to 8, wherein a stream of H₂, preferably a stream of renewable H₂, is added to the stream of syngas before step (d), said stream of H₂ preferably having been heated.

10. A blast furnace installation for producing pig iron comprising a blast furnace provided with gas inlets in the shaft arranged for feeding a stream of syngas to the blast furnace, said blast furnace installation further comprising a first heater in fluidic downstream connection with a stream of steam and in fluidic downstream or upstream connection with an oxygen source providing oxygen or oxygen-enriched air, said first heater being arranged for heating said stream of steam to provide a first heated stream of oxygen-enriched steam; a second heater in fluidic connection with the top of the blast furnace arranged for conveying a first stream of blast furnace gas and with a source of a first stream of natural gas, said second heater being arranged for heating said first stream of blast furnace gas and said first stream of natural gas either separately or mixed to provide a heated carbon feed stream; said first and second heater being in fluidic downstream connection with one or more reactor inlets of a catalytic partial oxidation reactor arranged for producing a stream of syngas, either directly for feeding the first heated stream of oxygen-enriched steam and the heated carbon feed stream separately to said one or more reactor inlets or through a mixing unit arranged for first joining the first heated stream of oxygen-enriched steam with the heated carbon feed stream to provide a combined stream and for feeding said combined stream to said one or more reactor inlets; said catalytic partial oxidation reactor being in fluidic downstream connection with the gas inlets in the shaft of the blast furnace.

11. The blast furnace installation as claimed in claim 10, wherein the blast furnace installation is configured for implementing the method for operating a blast furnace for producing of pig iron as claimed in any of claims 1 to 9.

12. The blast furnace installation as claimed in claim 10 or 11, wherein the oxygen source is oxygen gas and the catalytic partial oxidation reactor is a Short Contact Time Catalytic Partial Oxidation reactor; and/or wherein the first heater is in fluidic upstream connection with a source of oxygen, further comprising a fourth heater configured for heating oxygen for enriching the first heated stream of steam downstream of the first heater to a temperature differing by no more than 100 °C, preferably by no more than 50 °C from the temperature of said first heated stream of steam before oxygen enrichment.

13. The blast furnace installation as claimed in any one of claims 10 to 12, wherein fluidic connection conveying the first stream of blast furnace gas from the blast furnace comprises a gas cleaning plant, preferably comprising a dust removal unit, a metals removal unit and/or a HCl removal unit.

14. The blast furnace installation as claimed in any one of claims 10 to 13, wherein said second heater is in fluidic downstream connection with a third heater arranged for further heating the carbon feed stream upstream of mixing unit.

15. The blast furnace installation as claimed in any one of claims 10 to 14, wherein a burner within the first and/or the second heater and/or, if applicable, the third heater, is in fluidic connection with the top of the blast furnace for conveying and burning a second stream of blast furnace gas to provide the heat within said heaters; wherein the first, second and third heaters are preferably heated by a same burner: and/or wherein the burner or each burner preferably comprises an off-gas collection device which is arranged for feeding said off-gas to the first stream of blast furnace gas from the blast furnace, to the first stream of natural gas or to the heated carbon feed stream.

16. The blast furnace installation as claimed in any one of claims 10 to 15, further comprising a desulphurization unit arranged within the fluidic connection of the first stream of blast furnace gas and/or the first stream of natural gas and/or the heated carbon feed stream, preferably within the fluidic connection of the heated carbon feed stream.

17. The blast furnace installation as claimed in any one of claims 10 to 16, wherein the first heater, the second heater and, if applicable the third heater, are controlled such that a temperature of the combined stream is from 200 to 500 °C, preferably from 300 to 400 °C.

18. The blast furnace installation as claimed in any one of claims 10 to 17, wherein the fluidic connection between the catalytic partial oxidation reactor and the gas inlets in the shaft of the blast furnace is provided with a fluidic connection to a source of a stream of H₂, preferably a stream of renewable H₂, more preferably said fluidic connection to a source of a stream of H₂ is provided with a further heater for heating said stream of H₂.

## Patentansprüche

1. Verfahren zum Betreiben eines Hochofens zum Erzeugen von Roheisen, umfassend die folgenden Schritte:
(a) Erwärmen eines ersten Stroms von Dampf in einer ersten Heizung, bevor oder nachdem er mit einer Sauerstoffquelle gemischt worden ist, die aus Sauerstoff und mit Sauerstoff angereicherter Luft ausgewählt ist, um einen ersten erwärmten Strom von mit Sauerstoff angereichertem Dampf bereitzustellen,
(b) Erwärmen eines ersten Stroms von Hochofengas von dem Hochofen und eines ersten Stroms von Erdgas in einer zweiten Heizung, bevor oder nachdem diese miteinander vermischt worden sind, um einen erwärmten Kohlenstoffzufuhrstrom bereitzustellen,
(c) Zuführen des ersten erwärmten Stroms von mit Sauerstoff angereichertem Dampf und des erwärmten Kohlenstoffzufuhrstroms entweder als kombinierter Strom oder separat einem katalytischen Reaktor zur partiellen Oxidation, um einen Strom von Synthesegas zu erzeugen, und
(d) Zuführen des Stroms von Synthesegas zu dem Schacht des Hochofens.

2. Verfahren nach Anspruch 1, wobei die Sauerstoffquelle Sauerstoff ist und der katalytische Reaktor zur partiellen Oxidation ein katalytischer Reaktor zur partiellen Oxidation mit kurzer Kontaktzeit ist; und/oder wobei die Sauerstoffquelle zum Anreichern des ersten erwärmten Stroms von Dampf auf eine Temperatur erwärmt wird, die sich um nicht mehr als 100 °C, vorzugsweise um nicht mehr als 50 °C, von der Temperatur des ersten erwärmten Stroms von Dampf vor der Sauerstoffanreicherung unterscheidet.

3. Verfahren nach Anspruch 1 oder 2, wobei der erste Strom von Hochofengas ferner einem Gasreinigungsschritt unterzogen wird, vorzugsweise einem Staubentfernungsschritt, einem Metallentfernungsschritt und/oder einem HCl-Entfernungsschritt, bevor er mit dem ersten Strom von Erdgas gemischt wird.

4. Verfahren nach einem der Ansprüche 1 bis 3, wobei der erwärmte Kohlenstoffzufuhrstrom aus Schritt (b) ferner innerhalb einer dritten Heizung vor Schritt (c) erwärmt wird.

5. Verfahren nach einem der Ansprüche 1 bis 4, wobei ein zweiter Strom von Hochofengas in einem Brenner innerhalb der ersten und/oder der zweiten Heizung und/oder, gegebenenfalls, der dritten Heizung verbrannt wird, um die Wärme innerhalb der Heizungen bereitzustellen; wobei die erste, zweite und dritte Heizung vorzugsweise durch einen selben Brenner erwärmt werden; und/oder wobei von dem Brenner (den Brennern) erzeugtes Abgas vorzugsweise dem ersten Strom von Hochofengas zugeführt wird, der von dem Hochofen kommt, oder dem ersten Strom von Erdgas oder dem erwärmten Kohlenstoffzufuhrstrom zugeführt wird.

6. Verfahren nach einem der Ansprüche 1 bis 5, wobei der erste Strom von Hochofengas und/oder der erste Strom von Erdgas und/oder der erwärmte Kohlenstoffzufuhrstrom einem Entschwefelungsschritt unterzogen wird/werden, vorzugsweise der erwärmte Kohlenstoffzufuhrstrom einem Entschwefelungsschritt unterzogen wird.

7. Verfahren nach einem der Ansprüche 1 bis 6, wobei die Temperatur des kombinierten Stroms in Schritt (c) von 200 bis 500 °C, vorzugsweise von 300 bis 400 °C reicht.

8. Verfahren nach einem der Ansprüche 1 bis 7, wobei der erste erwärmte Strom von mit Sauerstoff angereichertem Dampf, der Strom von Erdgas und der Strom von Hochofengas in solchen Mengen zugeführt werden, dass der Strom von Synthesegas aus Schritt (d) eine chemische Zusammensetzung aufweist, die die folgenden Einschränkungen von CH₄ < 5 Vol.-%, H₂O < 8 Vol.-% und (CO+H₂)/(H₂O+CO₂) > 7 erfüllt.

9. Verfahren nach einem der Ansprüche 1 bis 8, wobei ein Strom von H₂, vorzugsweise ein Strom von erneuerbarem H₂, dem Strom von Synthesegas vor Schritt (d) hinzugefügt wird, wobei der Strom von H₂ vorzugsweise erwärmt worden ist.

10. Hochofenanlage zum Erzeugen von Roheisen, umfassend einen Hochofen, der mit Gaseinlässen in dem Schacht versehen ist, die zum Zuführen eines Stroms von Synthesegas zu dem Hochofen angeordnet sind, wobei die Hochofenanlage ferner eine erste Heizung in strömungstechnischer stromabwärtiger Verbindung mit einem Strom von Dampf und in strömungstechnischer stromabwärtiger oder stromaufwärtiger Verbindung mit einer Sauerstoffquelle umfasst, die Sauerstoff oder mit Sauerstoff angereicherte Luft bereitstellt, wobei die erste Heizung zum Erwärmen des Stroms von Dampf angeordnet ist, um einen ersten erwärmten Strom von mit Sauerstoff angereichertem Dampf bereitzustellen; wobei eine zweite Heizung in strömungstechnischer Verbindung mit der Gicht des Hochofens zum Fördern eines ersten Stroms von Hochofengas und mit einer Quelle eines ersten Stroms von Erdgas angeordnet ist, wobei die zweite Heizung zum Erwärmen des ersten Stroms von Hochofengas und des ersten Stroms von Erdgas entweder separat oder gemischt angeordnet ist, um einen erwärmten Kohlenstoffzufuhrstrom bereitzustellen; wobei die erste und die zweite Heizung in strömungstechnischer stromabwärtiger Verbindung mit einem oder mehreren Reaktoreinlässen eines katalytischen Reaktors zur partiellen Oxidation stehen, der zum Erzeugen eines Stroms von Synthesegas angeordnet ist, und zwar entweder direkt zum Zuführen des ersten erwärmten Stroms von mit Sauerstoff angereichertem Dampf und des erwärmten Kohlenstoffzufuhrstroms separat zu dem einen oder den mehreren Reaktoreinlässen oder über eine Mischeinheit, die zunächst zum Zusammenführen des ersten erwärmten Stroms von mit Sauerstoff angereichertem Dampf mit dem erwärmten Kohlenstoffzufuhrstrom angeordnet ist, um einen kombinierten Strom bereitzustellen, und zum Zuführen des kombinierten Stroms zu dem einen oder den mehreren Reaktoreinlässen angeordnet ist; wobei der katalytische Reaktor zur partiellen Oxidation in strömungstechnischer stromabwärtiger Verbindung mit den Gaseinlässen in dem Schacht des Hochofens steht.

11. Hochofenanlage nach Anspruch 10, wobei die Hochofenanlage dafür konfiguriert ist, das Verfahren zum Betreiben eines Hochofens zum Erzeugen von Roheisen nach einem der Ansprüche 1 bis 9 zu implementieren.

12. Hochofenanlage nach Anspruch 10 oder 11, wobei die Sauerstoffquelle Sauerstoffgas ist und der katalytische Reaktor zur partiellen Oxidation ein katalytischer Reaktor zur partiellen Oxidation mit kurzer Kontaktzeit ist; und/oder wobei die erste Heizung in strömungstechnischer stromaufwärtiger Verbindung mit einer Quelle von Sauerstoff steht, ferner umfassend eine vierte Heizung, die zum Erwärmen von Sauerstoff zum Anreichern des ersten erwärmten Stroms von Dampf stromabwärts der ersten Heizung auf eine Temperatur erwärmt wird, die sich um nicht mehr als 100 °C, vorzugsweise um nicht mehr als 50 °C, von der Temperatur des ersten erwärmten Stroms von Dampf vor der Sauerstoffanreicherung unterscheidet.

13. Hochofenanlage nach einem der Ansprüche 10 bis 12, wobei die strömungstechnische Verbindung, die den ersten Strom von Hochofengas von dem Hochofen befördert, eine Gasreinigungsanlage umfasst, die vorzugsweise eine Staubentfernungseinheit, eine Metallentfernungseinheit und/oder eine HCl-Entfernungseinheit umfasst.

14. Hochofenanlage nach einem der Ansprüche 10 bis 13, wobei die zweite Heizung in strömungstechnischer stromabwärtiger Verbindung mit einer dritten Heizung steht, die zum weiteren Erwärmen des Kohlenstoffzufuhrstroms stromaufwärts der Mischeinheit angeordnet ist.

15. Hochofenanlage nach einem der Ansprüche 10 bis 14, wobei ein Brenner innerhalb der ersten und/oder der zweiten Heizung und/oder gegebenenfalls der dritten Heizung in strömungstechnischer Verbindung mit der Gicht des Hochofens zum Fördern und Verbrennen eines zweiten Stroms von Hochofengas steht, um die Wärme innerhalb der Heizungen bereitzustellen; wobei die erste, zweite und dritte Heizung vorzugsweise durch einen selben Brenner erwärmt werden; und/oder wobei der Brenner oder jeder Brenner vorzugsweise eine Abgassammelvorrichtung umfasst, die zum Zuführen des Abgases zu dem ersten Strom von Hochofengas von dem Hochofen, zu dem ersten Strom von Erdgas oder zu dem erwärmten Kohlenstoffzufuhrstrom angeordnet ist.

16. Hochofenanlage nach einem der Ansprüche 10 bis 15, ferner umfassend eine Entschwefelungseinheit, die innerhalb der strömungstechnischen Verbindung des ersten Stroms von Hochofengas und/oder des ersten Stroms von Erdgas und oder des erwärmten Kohlenstoffzufuhrstroms, vorzugsweise innerhalb der strömungstechnischen Verbindung des erwärmten Kohlenstoffzufuhrstroms angeordnet ist.

17. Hochofenanlage nach einem der Ansprüche 10 bis 16, wobei die erste Heizung, die zweite Heizung und gegebenenfalls die dritte Heizung derart gesteuert werden, dass eine Temperatur des kombinierten Stroms von 200 bis 500 °C, vorzugsweise von 300 bis 400 °C reicht.

18. Hochofenanlage nach einem der Ansprüche 10 bis 17, wobei die strömungstechnische Verbindung zwischen dem katalytischen Reaktor zur partiellen Oxidation und den Gaseinlässen in dem Schacht des Hochofens mit einer strömungstechnischen Verbindung zu einer Quelle von einem Strom von H₂, vorzugsweise einem Strom von erneuerbarem H₂, stärker bevorzugt die strömungstechnischen Verbindung zu einer Quelle eines Stroms von H₂ mit einer weiteren Heizung zum Erwärmen des Stroms von H₂ versehen ist.

## Revendications

1. Procédé de fonctionnement d'un haut-fourneau pour produire de la fonte grise, comprenant les étapes de
a) chauffage d'un premier courant de vapeur dans un premier appareil de chauffage, avant ou après son mélange avec une source d'oxygène choisie parmi de l'oxygène et de l'air enrichi en oxygène, pour fournir un premier courant chauffé de vapeur enrichie en oxygène,
b) chauffage d'un premier courant de gaz de haut-fourneau provenant du haut-fourneau et d'un premier courant de gaz naturel dans un deuxième appareil de chauffage, avant ou après leur mélange ensemble pour fournir un courant d'alimentation chauffé de carbone,
c) alimentation du premier courant chauffé de vapeur enrichie en oxygène et du courant d'alimentation chauffé de carbone soit comme un courant combiné, soit séparément dans un réacteur d'oxydation catalytique partielle pour produire un courant de gaz de synthèse, et
d) alimentation dudit courant de gaz de synthèse dans la cuve du haut-fourneau.

2. Procédé selon la revendication 1, dans lequel la source d'oxygène est l'oxygène et le réacteur d'oxydation catalytique partielle est un réacteur d'oxydation catalytique partielle à temps de contact court et/ou dans lequel la source d'oxygène pour enrichir le premier courant chauffé de vapeur est chauffée à une température différant de pas plus de 100°C, préférablement de pas plus de 50°C de la température dudit premier courant chauffé de vapeur avant enrichissement en oxygène.

3. Procédé selon la revendication 1 ou 2, dans lequel le premier courant de gaz de haut-fourneau est en outre soumis à une étape de nettoyage de gaz, préférablement une étape d'élimination de poussières, une étape d'élimination de métaux et/ou une étape d'élimination de HCl avant son mélange avec le premier courant de gaz naturel.

4. Procédé selon l'une quelconque des revendications 1 à 3, dans lequel le courant d'alimentation chauffé de carbone de l'étape (b) est en outre chauffé avec un troisième appareil de chauffage avant l'étape (c).

5. Procédé selon l'une quelconque des revendications 1 à 4, dans lequel un deuxième courant de gaz de haut-fourneau est brûlé dans un brûleur avec le premier et/ou le deuxième appareil de chauffage et/ou, si applicable, le troisième appareil de chauffage pour fournir la chaleur à l'intérieur desdits appareils de chauffage ; dans lequel les premier, deuxième et troisième appareils de chauffage sont chauffés de préférence par un même brûleur ; et/ou les gaz de combustion produits par le ou les brûleurs étant de préférence dirigés vers le premier flux de gaz de haut fourneau provenant du haut fourneau, vers le premier flux de gaz naturel ou vers le flux de charge carbonée chauffé.

6. Procédé selon l'une quelconque des revendications 1 à 5, dans lequel le premier courant de gaz de haut-fourneau et/ou le premier courant de gaz naturel et/ou le courant d'alimentation chauffé de carbone est/sont soumis à une étape de désulfuration, préférablement le courant d'alimentation chauffé de carbone est soumis à une étape de désulfuration.

7. Procédé selon l'une quelconque des revendications 1 à 6, dans lequel la température du courant combiné à l'étape (c) est de 200 à 500°C, préférablement de 300 à 400°C.

8. Procédé selon l'une quelconque des revendications 1 à 7, dans lequel le premier courant chauffé de vapeur enrichie en oxygène, le courant de gaz naturel et le courant de gaz de haut-fourneau sont alimentés dans des quantités telles que le courant de gaz de synthèse de l'étape (d) a une composition chimique satisfaisant aux contraintes suivantes de CH₄ < 5% vol, H₂O < 8% vol et (CO+H₂)/(H₂O+CO₂) > 7.

9. Procédé selon l'une quelconque des revendications 1 à 8, dans lequel un courant de H₂, préférablement un courant de H₂ renouvelable, est ajouté au courant de gaz de synthèse avant l'étape (d), ledit courant de H₂ ayant préférablement été chauffé.

10. Installation de haut-fourneau pour produire de la fonte grise comprenant un haut-fourneau prévu avec des entrées de gaz dans la cuve agencées pour alimenter un courant de gaz de synthèse dans le haut-fourneau, ladite installation de haut-fourneau comprenant en outre un premier appareil de chauffage en connexion fluidique vers l'aval avec un courant de vapeur et en connexion fluidique vers l'aval ou vers l'amont avec une source d'oxygène fournissant de l'oxygène ou de l'air enrichi en oxygène, ledit premier appareil de chauffage étant agencé pour chauffer ledit courant de vapeur pour fournir un premier courant chauffé de vapeur enrichie en oxygène ; un deuxième appareil de chauffage en connexion fluidique avec le sommet du haut-fourneau agencé pour transporter un premier courant de gaz de haut-fourneau et avec une source d'un premier courant de gaz naturel, ledit deuxième appareil de chauffage étant agencé pour chauffer ledit premier courant de gaz de haut-fourneau et ledit premier courant de gaz naturel soit séparément, soit mélangés pour fournir un courant d'alimentation chauffé de carbone ; lesdits premier et deuxième appareils de chauffage étant en connexion fluidique vers l'aval avec une ou plusieurs entrées de réacteur d'un réacteur d'oxydation catalytique partielle agencé pour produire un courant de gaz de synthèse, soit directement pour alimenter le premier courant chauffé de vapeur enrichie en oxygène et le courant d'alimentation chauffé de carbone séparément dans lesdites une ou plusieurs entrées de réacteur, soit par l'intermédiaire d'une unité de mélange agencée pour premièrement joindre le premier courant chauffé de vapeur enrichie en oxygène avec le courant d'alimentation chauffé de carbone pour fournir un courant combiné et pour alimenter ledit courant combiné dans lesdites une ou plusieurs entrées de réacteur ; ledit réacteur d'oxydation catalytique partielle étant en connexion fluidique vers l'aval avec les entrées de gaz dans la cuve du haut-fourneau.

11. Installation de haut-fourneau selon la revendication 10, dans laquelle l'installation de haut-fourneau est configurée pour mettre en œuvre le procédé de fonctionnement d'un haut-fourneau pour produire de la fonte grise selon l'une quelconque des revendications 1 à 9.

12. Installation de haut-fourneau selon la revendication 10 ou 11, dans laquelle la source d'oxygène est le gaz oxygène et le réacteur d'oxydation catalytique partielle est un réacteur d'oxydation catalytique partielle à temps de contact court ; et/ou dans laquelle le premier appareil de chauffage est en connexion fluidique vers l'amont avec une source d'oxygène, comprenant en outre un quatrième appareil de chauffage configuré pour chauffer l'oxygène pour enrichir le premier courant chauffé de vapeur en aval du premier appareil de chauffage à une température différant de pas plus de 100°C, préférablement de pas plus de 50°C de la température dudit premier courant chauffé de vapeur avant enrichissement en oxygène.

13. Installation de haut-fourneau selon l'une quelconque des revendications 10 à 12, dans laquelle une connexion fluidique transportant le premier courant de gaz de haut-fourneau provenant du haut-fourneau comprend une installation de nettoyage de gaz, comprenant préférablement une unité d'élimination de poussières, une unité d'élimination de métaux et/ou une unité d'élimination de HCl.

14. Installation de haut-fourneau selon l'une quelconque des revendications 10 à 13, dans laquelle ledit deuxième appareil de chauffage est en connexion fluidique vers l'aval avec un troisième appareil de chauffage agencé pour chauffer en outre le courant d'alimentation de carbone en amont de l'unité de mélange.

15. Installation de haut-fourneau selon l'une quelconque des revendications 10 à 14, dans laquelle un brûleur à l'intérieur du premier et/ou du deuxième appareil de chauffage et/ou, si applicable, du troisième appareil de chauffage, est en connexion fluidique avec le sommet du haut-fourneau pour transporter et brûler un deuxième courant de gaz de haut-fourneau pour fournir la chaleur à l'intérieur desdits appareils de chauffage, dans laquelle les premier, deuxième et troisième appareils de chauffage sont chauffés par un même brûleur, et/ou dans laquelle le brûleur ou chaque brûleur comprend un dispositif de recueil de gaz de dégagement qui est agencé pour alimenter ledit de gaz de dégagement dans le premier courant de gaz de haut-fourneau provenant du haut-fourneau, dans le premier courant de gaz naturel ou dans le courant d'alimentation chauffé de carbone.

16. Installation de haut-fourneau selon l'une quelconque des revendications 10 à 15, comprenant en outre une unité de désulfuration agencée à l'intérieur de la connexion fluidique du premier courant de gaz de haut-fourneau et/ou du premier courant de gaz naturel et/ou du courant d'alimentation chauffé de carbone, préférablement à l'intérieur de la connexion fluidique du courant d'alimentation chauffé de carbone.

17. Installation de haut-fourneau selon l'une quelconque des revendications 10 à 16, dans laquelle le premier appareil de chauffage, le deuxième appareil de chauffage et, si applicable, le troisième appareil de chauffage, sont commandés de telle manière qu'une température du courant combiné est de 200 à 500°C, préférablement de 300 à 400°C.

18. Installation de haut-fourneau selon l'une quelconque des revendications 10 à 17, dans laquelle la connexion fluidique entre le réacteur d'oxydation catalytique partielle et les entrées de gaz dans la cuve du haut-fourneau est prévue avec une connexion fluidique à une source d'un courant de H₂, préférablement un courant de H₂ renouvelable, plus préférablement ladite connexion fluidique à une source d'un courant de H₂ est prévue avec un autre appareil de chauffage pour chauffer ledit courant de H₂.
